# FASCICULE DE BREVET EUROPEEN

(11) **EP 4 368 512 B1**
(45) Date de publication et mention de la délivrance du brevet: **14.05.2025**
(21) Numéro de dépôt: 23207860.0
(22) Date de dépôt: 06.11.2023
(51) Int. Cl.: B64D 27/40, B64D 27/12

(54) **ENSEMBLE POUR UN AÉRONEF COMPORTANT UNE AILE ET UN MÂT RÉACTEUR POUR COUPLER UN SYSTÈME DE PROPULSION À LADITE AILE**
ANORDNUNG FÜR EIN FLUGZEUG MIT EINEM FLÜGEL UND EINEM REAKTORMAST ZUR KOPPLUNG EINES ANTRIEBSSYSTEMS AN DEN FLÜGEL
ASSEMBLY FOR AN AIRCRAFT COMPRISING A WING AND A JET ENGINE PYLON FOR COUPLING A PROPULSION SYSTEM TO SAID WING

(30) Priorité: 08.11.2022 FR 2211634
(43) Date de publication de la demande: 15.05.2024
(73) Titulaire: Airbus Operations, 31060 Toulouse (FR)
(72) Inventeur: PAUTIS, Olivier, 31060 Toulouse (FR); BERJOT, Michael, 31060 Toulouse (FR); COMBES, Pierre-Antoine, 31060 Toulouse (FR); TAVEAU, Paul-Adrien, 31060 Toulouse (FR)
(74) Mandataire: Cabinet Le Guen Maillet

(56) Documents cités:
- EP-A1- 0 115 914
- US-A1- 2017 088 278
- US-A1- 2021 101 689
- US-A1- 2022 017 229
- US-B2- 10 358 226
- US-B2- 10 583 930
- US-B2- 7 789 344
- US-B2- 9 238 511
- US-B2- 9 889 942

## Description

La présente invention concerne un ensemble pour un aéronef qui comporte une aile et un mât réacteur pour coupler un système de propulsion à l'aile, ainsi qu'un aéronef comportant un système de propulsion et un tel ensemble pour coupler le système de propulsion à l'aile.

### ÉTAT DE LA TECHNIQUE ANTÉRIEURE

Habituellement, pour un aéronef, un ensemble de propulsion comporte par exemple un turboréacteur qui est fixé à une aile de l'aéronef à l'aide d'un mât réacteur. Le mât réacteur est généralement constitué d'une structure primaire formée d'un caisson constitué d'un longeron supérieur, d'un longeron inférieur et de deux panneaux latéraux reliant les deux longerons et de nervures internes réparties le long du caisson.

Le turboréacteur est fixé sous le mât réacteur aux moyens d'attaches moteur qui comprennent classiquement, à l'avant, une attache moteur avant, à l'arrière, une attache moteur arrière, et entre les attaches moteur avant et arrière, un assemblage de reprise d'effort de poussée comprenant des bielles de reprise fixées entre le turboréacteur et la structure primaire du mât, pour absorber les forces de poussée générées par le turboréacteur.

Le mât réacteur est en outre fixé à la structure de l'aile à l'aide de ferrures à travers lesquelles les efforts provenant du turboréacteur transitent vers la structure de l'aile. Bien que les installations actuelles donnent satisfaction, il est nécessaire de fournir une implantation où le transfert d'efforts est amélioré notamment dans le cas où le moteur est installé verticalement très près de l'aile.

Le document US10358226 propose un ensemble connu pour le montage sur un aéronef d'un système de propulsion.

### EXPOSÉ DE L'INVENTION

Un objet de la présente invention est de proposer un ensemble pour un aéronef comportant une aile et un mât réacteur pour coupler un système de propulsion à l'aile et qui comporte des moyens de fixation à l'aile qui assurent un transfert amélioré des efforts vers la structure de l'aile tout en permettant que le moteur soit installé verticalement très près de l'aile.

À cet effet, est proposé un ensemble pour le montage sur un aéronef d'un système de propulsion présentant un plan médian vertical, ledit ensemble comportant :
- une aile avec un longeron avant, un panneau d'extrados et un panneau d'intrados fixés respectivement en partie haute du longeron avant et en partie basse du longeron avant, où le panneau d'extrados est traversé verticalement par un quatrième alésage et un cinquième alésage,
- un mât réacteur comportant une structure primaire, une palette solidaire de la structure primaire et s'étendant à l'arrière et en partie haute de la structure primaire, et deux pattes de fixation tribord et bâbord solidaires de la structure primaire et s'étendant à l'arrière et sur les côtés de la structure primaire, où la palette est traversée verticalement par un premier alésage, un deuxième alésage et un troisième alésage, où chaque patte de fixation est traversée horizontalement par un sixième alésage,
- deux premières manilles disposées verticalement de part et d'autre de la palette et du panneau d'extrados, où un premier alésage de chaque première manille est aligné de manière coaxiale avec le premier alésage de la palette avec un axe enfilé dans les alésages ainsi alignés, où un deuxième alésage de chaque première manille est aligné de manière coaxiale avec le quatrième alésage du panneau d'extrados avec un axe enfilé dans les alésages ainsi alignés,
- deux deuxièmes manilles disposées verticalement de part et d'autre de la palette et du panneau d'extrados, où un premier alésage de chaque deuxième manille est aligné de manière coaxiale avec le deuxième alésage de la palette avec un axe enfilé dans les alésages ainsi alignés, où un deuxième alésage de chaque deuxième manille est aligné de manière coaxiale avec le troisième alésage de la palette avec un axe enfilé dans les alésages ainsi alignés, où un troisième alésage de chaque deuxième manille est aligné de manière coaxiale avec le cinquième alésage du panneau d'extrados avec un axe enfilé dans les alésages ainsi alignés, et
- une ferrure tribord et une ferrure bâbord fixées sous le panneau d'intrados et présentant respectivement une chape femelle tribord dans laquelle est insérée la patte de fixation tribord et une chape femelle bâbord dans laquelle est insérée la patte de fixation bâbord, où chaque chape femelle est traversée par un septième alésage dont l'axe est coaxial avec l'axe du sixième alésage de la patte de fixation qui y est insérée, et où un axe est enfilé dans les alésages associés ainsi alignés.

Avec un tel mât réacteur, les efforts du moteur qui sont transportés par la structure primaire du mât sont transmis directement aux panneaux d'extrados et d'intrados.

Avantageusement, le panneau d'extrados comporte une plaque solidaire du panneau d'extrados et les deux alésages du panneau d'extrados sont réalisés dans ladite plaque.

L'invention propose également un aéronef comportant un système de propulsion et un ensemble selon l'une des variantes précédentes où le système de propulsion est fixé au mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue éclatée et en perspective d'un ensemble selon un premier mode de réalisation de l'invention, et
Fig. 3 est une vue éclatée et en perspective d'un ensemble selon un deuxième mode de réalisation de l'invention.

### EXPOSÉ DÉTAILLÉ DE MODES DE RÉALISATION

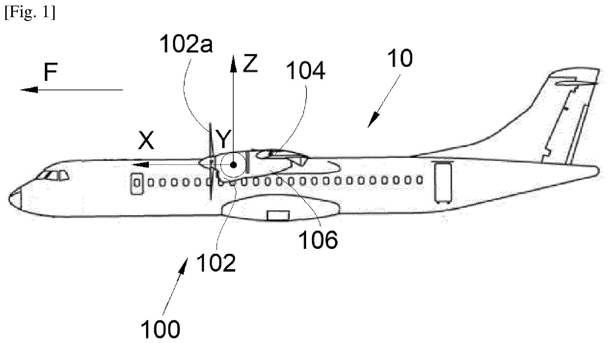

La Fig. 1 montre un aéronef 10 qui comporte un système de propulsion 102 par exemple du type turboréacteur ou turbopropulseur. Le système de propulsion 102 est lié à une aile 104 de l'aéronef 10 par l'intermédiaire d'un mât réacteur 106. L'aile 104 et le mât réacteur 106 forment un ensemble 100 selon l'invention et le système de propulsion 102 est fixé au mât réacteur 106 par tous moyens de fixation appropriés et connus de l'homme du métier tels que ceux divulgués dans le document US-A-2016/0221682.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du système de propulsion 102 et par rapport à la direction d'avancement F de l'aéronef 10 lorsque le système de propulsion 102 fonctionne.

Dans la description qui suit, et par convention, on appelle X la direction longitudinale du système de propulsion qui est horizontale lorsque l'aéronef est au sol, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le mât réacteur 106 et le système de propulsion 102 présentent un plan médian vertical XZ et le système de propulsion 102 est ici un turbopropulseur avec une hélice 102a, mais il pourrait être du type turboréacteur à double flux avec une nacelle.

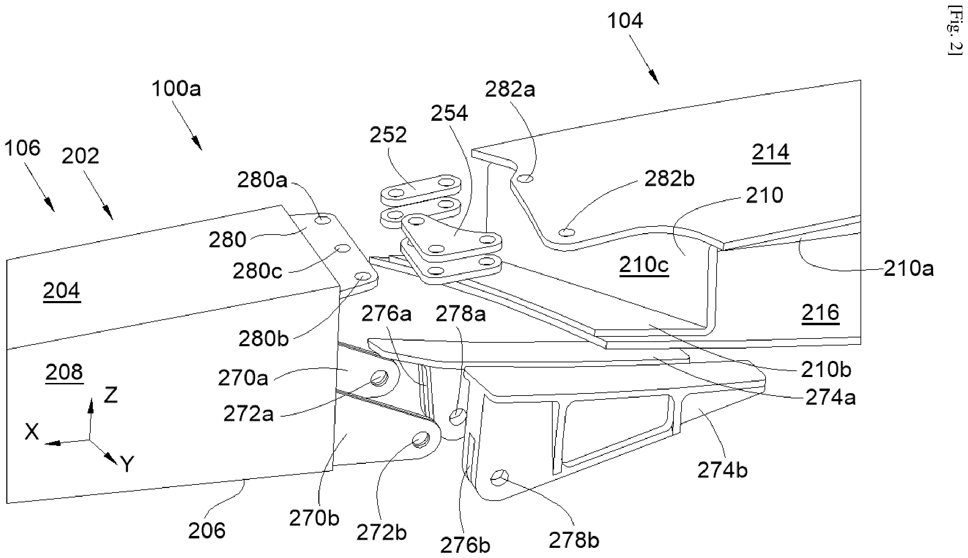

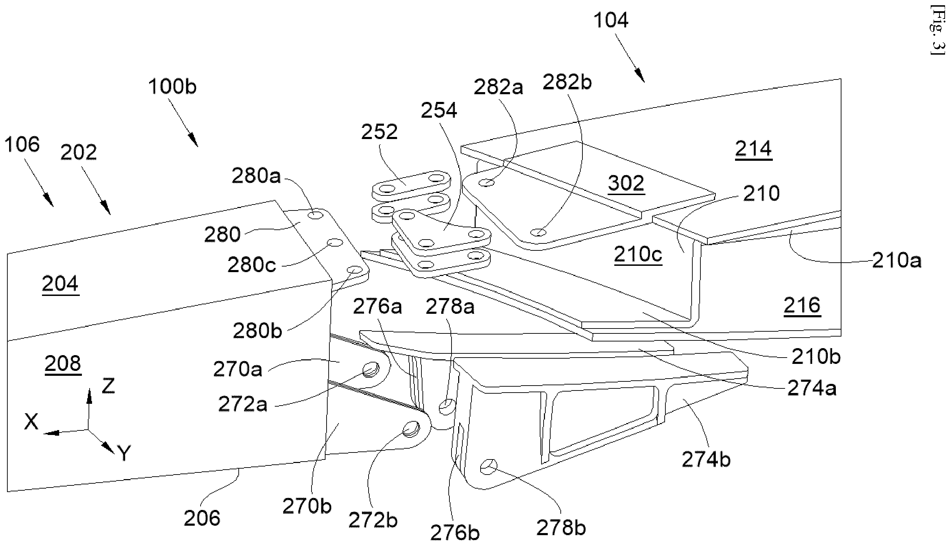

La Fig. 2 montre l'ensemble 100a selon un premier mode de réalisation de l'invention et la Fig. 3 montre l'ensemble 100b selon un deuxième mode de réalisation de l'invention. Les éléments communs aux deux modes de réalisation portent les mêmes références.

Le mât réacteur 106 comprend une structure rigide formant un caisson et également appelée structure primaire 202. La structure primaire 202 est formée d'un longeron supérieur 204, d'un longeron inférieur 206 et de deux panneaux latéraux 208 (seul le panneau babord est représenté sur les figures 1 et 2) tribord et bâbord reliant les deux longerons 204 et 206.

La structure de l'aile 104 comporte un longeron avant 210, un panneau d'extrados 214 et un panneau d'intrados 216 qui sont tous les deux fixés au longeron avant 210 et s'étendent globalement dans des plans horizontaux XY.

Bien sûr, pour assurer la rigidité de l'aile, sa structure comporte d'autres éléments tels que des nervures qui sont réparties entre le panneau d'extrados 214 et le panneau d'intrados 216.

Le longeron avant 210 prend ici la forme d'un profilé en forme d'une marche en Z inversé sur la Fig. 2, avec une aile supérieure 210a et une aile inférieure 210b qui sont globalement horizontales et une partie centrale 210c globalement perpendiculaire au plan médian et s'étendant verticalement dans le plan YZ. Le panneau d'extrados 214 est fixé au-dessus de l'aile supérieure 210a du longeron 210 et le panneau d'intrados 216 est fixé au-dessous de l'aile inférieure 210b du longeron 210. La fixation du longeron avant 210 aux panneaux 214 et 216 est réalisée par tous moyens appropriés comme par exemple des soudures, des boulons, etc. Le panneau d'extrados 214 est ainsi fixé en partie haute du longeron avant 210 et le panneau d'intrados 216 est fixé en partie basse du longeron avant 210.

La partie centrale 210c est au niveau du bord d'attaque de l'aile 104.

La fixation du mât réacteur 106 à l'aile 104 diffère légèrement entre le premier mode de réalisation et le deuxième mode de réalisation.

Le mât réacteur 106 comporte à l'arrière, une palette 280 qui est solidaire de la structure primaire 202 et qui s'étend à l'arrière de la structure primaire 202 dans le prolongement du longeron supérieur 204. La palette 280 s'étend ainsi globalement horizontalement parallèlement au plan XY. La palette 280 est traversée par trois alésages 280a-c et l'axe de chaque alésage 280a-c de la palette 280 est globalement vertical. Il y a ainsi un premier alésage 280a, ici tribord, un deuxième alésage 280b, ici bâbord, et un troisième alésage 280c, ici central. Le troisième alésage 280c est globalement dans le plan médian et le premier alésage 280a et le deuxième alésage 280b sont de part et d'autre du plan médian. La palette 280 s'étend ainsi en partie haute de la structure primaire 202 vers le longeron avant 210 de la voilure 104 et en vis-à-vis du panneau extrados 214.

Dans le premier mode de réalisation de l'invention, le panneau d'extrados 214 est traversé par deux alésages 282a-b et l'axe de chaque alésage 282a-b du panneau d'extrados 214 est parallèle aux axes des alésages 280a-c de la palette 280 et est donc globalement vertical. Il y a un quatrième alésage 282a, ici tribord, et un cinquième alésage 282b, ici bâbord.

Dans le deuxième mode de réalisation de l'invention, le panneau d'extrados 214 comporte une plaque 302 qui est solidaire du panneau d'extrados 214, qui s'étend vers l'avant et qui est traversé par les deux alésages 282a-b du panneau d'extrados 214. La plaque 302 s'étend ainsi vers l'avant depuis l'extrémité avant du panneau d'extrados 214 dans la zone du bord d'attaque de l'aile 104.

Les alésages 282a-b du panneau d'extrados 214 sont de part et d'autre du plan médian et sont alignés respectivement avec le premier alésage 280a et le deuxième alésage 280b parallèlement à la direction longitudinale X.

L'ensemble 100a-b comporte un premier jeu de manilles 252, ici tribord, et un deuxième jeu de manilles 254, ici bâbord, et chaque jeu de manilles 252, 254 est constitué de deux manilles identiques superposées verticalement. Dans le mode de réalisation de l'invention présenté ici, les manilles 252 du premier jeu sont à deux points de fixation et les manilles 254 du deuxième jeu sont à trois points de fixation, mais dans un autre mode de réalisation non représenté, les manilles 252 à deux points et les manilles 254 à trois points peuvent être inversées de tribord à bâbord et inversement.

L'un des jeux de manilles 252, 254, ici le premier jeu de manilles 252, est constitué de deux premières manilles 252, chacune comportant deux alésages. Les deux premières manilles 252 sont disposées verticalement de part et d'autre de la palette 280 où un premier alésage de chaque première manille 252 est aligné de manière coaxiale avec le premier alésage 280a de la palette 280. Un axe est enfilé dans le premier alésage de chaque première manille 252 et le premier alésage 280a de la palette 280 pour former un point de liaison sous la forme d'une liaison pivot autour d'un axe globalement vertical.

Les deux premières manilles 252 sont disposées verticalement de part et d'autre du panneau d'extrados 214 où un deuxième alésage de chaque première manille 252 est aligné de manière coaxiale avec le quatrième alésage 282a du panneau d'extrados 214. Un axe est enfilé dans le deuxième alésage de chaque première manille 252 et le quatrième alésage 282a du panneau d'extrados 214 pour former un point de liaison sous la forme d'une liaison pivot autour d'un axe globalement vertical.

L'autre des jeux de manilles 252, 254, ici le deuxième jeu de manilles 254, est constitué de deux deuxièmes manilles 254 chacune comportant trois alésages. Les deux deuxièmes manilles 254 sont disposées verticalement de part et d'autre de la palette 280 où un premier alésage de chaque deuxième manille 254 est aligné de manière coaxiale avec le deuxième alésage 280b de la palette 280 et où un deuxième alésage de chaque deuxième manille 254 est aligné de manière coaxiale avec le troisième alésage 280c de la palette 280. Un axe est enfilé dans le premier alésage de chaque deuxième manille 254 et le deuxième alésage 280b de la palette 280 pour former un point de liaison sous la forme d'une liaison pivot autour d'un axe globalement vertical. Un axe est enfilé dans le deuxième alésage de chaque deuxième manille 254 et le troisième alésage 280c de la palette 280 pour former un point de liaison sous la forme d'une liaison pivot autour d'un axe globalement vertical.

Les deux deuxièmes manilles 254 sont disposées verticalement de part et d'autre du panneau d'extrados 214 où un troisième alésage de chaque deuxième manille 254 est aligné de manière coaxiale avec le cinquième alésage 282b du panneau d'extrados 214. Un axe est enfilé dans le troisième alésage de chaque deuxième manille 254 et le cinquième alésage 282b du panneau d'extrados 214 pour former un point de liaison sous la forme d'une liaison pivot autour d'un axe globalement vertical.

Le mât réacteur 106 comporte à l'arrière de la structure primaire 202, deux pattes de fixation tribord 270a et bâbord 270b qui sont solidaires de la structure primaire 202 et qui s'étendent à l'arrière de la structure primaire 202 dans le prolongement respectivement du panneau latéral tribord et du panneau latéral bâbord 208. Les pattes de fixation 270a-b s'étendent ainsi sur les côtés tribord et bâbord de la structure primaire 202 vers le longeron avant 210.

Chaque patte de fixation 270a-b s'étend ainsi globalement dans un plan vertical parallèle au plan XZ et elles sont de part et d'autre du plan médian. Chaque patte de fixation 270a-b est traversée par un sixième alésage 272a-b, respectivement tribord et bâbord et l'axe de chaque sixième alésage 272a-b est globalement horizontal. Il y a ainsi un sixième alésage tribord 272a et un sixième alésage bâbord 272b qui sont coaxiaux.

L'ensemble 100a-b comporte également deux ferrures 274a-b, à savoir une ferrure tribord 274a et une ferrure bâbord 274b qui sont disposées de part et d'autre du plan médian et chacune est fixée sous le panneau d'intrados 216 par tous moyens appropriés comme des soudures, des boulons, etc.

Chaque ferrure 274a-b présente une chape femelle 276a-b, à savoir une chape femelle tribord 276a dans laquelle est insérée la patte de fixation tribord 270a et une chape femelle bâbord 276b dans laquelle est insérée la patte de fixation bâbord 270b.

Chaque chape femelle 276a-b est traversée par un septième alésage 278a-b dont l'axe est coaxial avec l'axe du sixième alésage 272a-b de la patte de fixation 270a-b qui y est insérée, c'est-à-dire globalement horizontal.

La liaison entre une ferrure 274a-b et la patte de fixation 270a-b associée est assurée par la mise en place d'un axe qui s'enfile dans les alésages associés c'est-à-dire de la chape femelle 276a-b et de la patte de fixation 270a-b. et prend la forme d'une liaison pivot autour d'un axe globalement horizontal.

Les efforts provenant du système de propulsion 102 transitent ainsi à travers le mât réacteur 106 puis directement dans les panneaux d'extrados 214 et d'intrados 216. En outre, la partie arrière du mât réacteur 106 est ainsi en regard du longeron avant 210 dont toute la hauteur est utilisée afin de réduire les efforts induits par la reprise des moments, en particulier MY et MZ. Les efforts longitudinaux (Tx) sont distribués à travers :
- les deux manilles tribord 252,
- les deux manilles bâbord 254 à travers le deuxième alésage 280b de la palette 280 et le cinquième alésage 282b du panneau d'extrados 214, et
- les liaisons entre les chapes femelles 276a-b et les pattes de fixation 270a-b.

Les efforts transversaux (Ty) sont transmis à travers les deux manilles bâbord 254.

Les efforts verticaux (Tz) sont transmis à travers les liaisons entre les chapes femelles 276a-b et les pattes de fixation 270a-b.

Le moment de torsion Mx autour de la direction longitudinale X est compensé au niveau des liaisons entre les chapes femelles 276a-b et les pattes de fixation 270a-b.

Le moment de flexion My autour de la direction transversale Y et le moment de flexion Mz autour de la direction verticale Z sont compensés au niveau des liaisons entre les chapes femelles 276a-b et les pattes de fixation 270a-b et au niveau des jeux de manilles 252 et 254 disposés de part et d'autre du plan médian vertical, à tribord et bâbord.

## Revendications

1. Ensemble (100, 100a-b) pour le montage sur un aéronef (10) d'un système de propulsion (102) présentant un plan médian vertical (XZ), ledit ensemble (100, 100a-b) comportant :
- une aile (104) avec un longeron avant (210), un panneau d'extrados (214) et un panneau d'intrados (216) fixés respectivement en partie haute du longeron avant (210) et en partie basse du longeron avant (210), où le panneau d'extrados (214) est traversé verticalement par un quatrième alésage (282a) et un cinquième alésage (282b),
- un mât réacteur (106) comportant une structure primaire (202), une palette (280) solidaire de la structure primaire (202) et s'étendant à l'arrière et en partie haute de la structure primaire (202), et deux pattes de fixation tribord (270a) et bâbord (270b) solidaires de la structure primaire (202) et s'étendant à l'arrière et sur les côtés de la structure primaire (202), où la palette (280) est traversée verticalement par un premier alésage (280a), un deuxième alésage (280b) et un troisième alésage (280c), où chaque patte de fixation (270a-b) est traversée horizontalement par un sixième alésage (272a-b), et
- une ferrure tribord (274a) et une ferrure bâbord (274b) présentant respectivement une chape femelle tribord (276a) dans laquelle est insérée la patte de fixation tribord (270a) et une chape femelle bâbord (276b) dans laquelle est insérée la patte de fixation bâbord (270b), où chaque chape femelle (276a-b) est traversée par un septième alésage (278a-b) dont l'axe est coaxial avec l'axe du sixième alésage (272a-b) de la patte de fixation (270a-b) qui y est insérée, et où un axe est enfilé dans les alésages associés ainsi alignés.
ledit ensemble (100, 100a-b) étant **caractérisé en ce que** la ferrure tribord (274a) et la ferrure bâbord (274b) sont fixées sous le panneau d'intrados (216), et **en ce que** ledit ensemble (100, 100a-b) comporte en outre :
- deux premières manilles (252) disposées verticalement de part et d'autre de la palette (280) et du panneau d'extrados (214), où un premier alésage de chaque première manille (252) est aligné de manière coaxiale avec le premier alésage (280a) de la palette (280) avec un axe enfilé dans les alésages ainsi alignés, où un deuxième alésage de chaque première manille (252) est aligné de manière coaxiale avec le quatrième alésage (282a) du panneau d'extrados (214) avec un axe enfilé dans les alésages ainsi alignés, et
- deux deuxièmes manilles (254) disposées verticalement de part et d'autre de la palette (280) et du panneau d'extrados (214), où un premier alésage de chaque deuxième manille (254) est aligné de manière coaxiale avec le deuxième alésage (280b) de la palette (280) avec un axe enfilé dans les alésages ainsi alignés, où un deuxième alésage de chaque deuxième manille (254) est aligné de manière coaxiale avec le troisième alésage (280c) de la palette (280) avec un axe enfilé dans les alésages ainsi alignés, où un troisième alésage de chaque deuxième manille (254) est aligné de manière coaxiale avec le cinquième alésage (282b) du panneau d'extrados (214) avec un axe enfilé dans les alésages ainsi alignés.

2. Ensemble (100b) selon la revendication 1, **caractérisé en ce que** le panneau d'extrados (214) comporte une plaque (302) solidaire du panneau d'extrados (214) et **en ce que** les deux alésages (282a-b) du panneau d'extrados (214) sont réalisés dans ladite plaque (302).

3. Aéronef (10) comportant un système de propulsion (102) et un ensemble (100) selon l'une des revendications 1 ou 2, où le système de propulsion (102) est fixé au mât réacteur (106).

## Patentansprüche

1. Anordnung (100, l00a-b) zur Montage, an einem Flugzeug (10), eines Antriebssystems (102), das eine vertikale Mittelebene (XZ) aufweist, wobei die Anordnung (100, l00a-b) Folgendes umfasst:
- eine Tragfläche (104) mit einem Vorderholm (210), einer Oberseitenplatte (214) und einer Unterseitenplatte (216), die jeweils oben am Vorderholm (210) bzw. unten am Vorderholm (210) befestigt sind, wobei die Oberseitenplatte (214) vertikal von einer vierten Bohrung (282a) und einer fünften Bohrung (282b) durchquert wird,
- einen Triebwerkspylon (106), umfassend eine Primärstruktur (202), einen Ansatz (280), der mit der Primärstruktur (202) fest verbunden ist und sich hinten und oben von der Primärstruktur (202) erstreckt, und zwei Befestigungslaschen, eine steuerbordseitige (270a) und eine backbordseitige (270b), die mit der Primärstruktur (202) fest verbunden sind und sich hinten und an den Seiten der Primärstruktur (202) erstrecken, wobei der Ansatz (280) vertikal von einer ersten Bohrung (280a), einer zweiten Bohrung (280b) und einer dritten Bohrung (280c) durchquert wird, wobei jede Befestigungslasche (270a-b) horizontal von einer sechsten Bohrung (272a-b) durchquert wird, und
- einen steuerbordseitigen Beschlag (274a) und einen backbordseitigen Beschlag (274b), die jeweils einen steuerbordseitigen Gabelkopf (276a), in den die steuerbordseitige Befestigungslasche (270a) eingeführt ist, und einen backbordseitigen Gabelkopf (276b), in den die backbordseitige Befestigungslasche (270b) eingeführt ist, aufweisen, wobei jeder Gabelkopf (276a-b) von einer siebten Bohrung (278a-b) durchquert wird, deren Achse koaxial zu der Achse der sechsten Bohrung (272a-b) der Befestigungslasche (270a-b), die darin eingeführt ist, ist, und wobei in die so ausgerichteten assoziierten Bohrungen eine Achse eingesteckt ist
wobei die Anordnung (100, l00a-b) **dadurch gekennzeichnet ist, dass** der steuerbordseitige Beschlag (274a) und der backbordseitige Beschlag (274b) unter der Unterseitenplatte (216) befestigt sind und dass die Anordnung (100, l00a-b) ferner Folgendes umfasst:
- zwei erste Bügel (252), die vertikal zu beiden Seiten des Ansatzes (280) und der Oberseitenplatte (214) angeordnet sind, wobei eine erste Bohrung jedes ersten Bügels (252) koaxial zu der ersten Bohrung (280a) des Ansatzes (280) ausgerichtet ist und eine Achse in die so ausgerichteten Bohrungen eingesteckt ist, wobei eine zweite Bohrung jedes ersten Bügels (252) koaxial zu der vierten Bohrung (282a) der Oberseitenplatte (214) ausgerichtet ist und eine Achse in die so ausgerichteten Bohrungen eingesteckt ist, und
- zwei zweite Bügel (254), die vertikal zu beiden Seiten des Ansatzes (280) und der Oberseitenplatte (214) angeordnet sind, wobei eine erste Bohrung jedes zweiten Bügels (254) koaxial zu der zweiten Bohrung (280b) des Ansatzes (280) ausgerichtet ist und eine Achse in die so ausgerichteten Bohrungen eingesteckt ist, wobei eine zweite Bohrung jedes zweiten Bügels (254) koaxial zu der dritten Bohrung (280c) des Ansatzes (280) ausgerichtet ist und eine Achse in die so ausgerichteten Bohrungen eingesteckt ist, wobei eine dritte Bohrung jedes zweiten Bügels (254) koaxial zu der fünften Bohrung (282b) der Oberseitenplatte (214) ausgerichtet ist und eine Achse in die so ausgerichteten Bohrungen eingesteckt ist.

2. Anordnung (100b) nach Anspruch 1, **dadurch gekennzeichnet, dass** die Oberseitenplatte (214) eine Tafel (302) umfasst, die fest mit der Oberseitenplatte (214) verbunden ist, und dass die zwei Bohrungen (282ab) der Oberseitenplatte (214) in der Tafel (302) ausgeführt sind.

3. Flugzeug (10), das ein Antriebssystem (102) und eine Anordnung (100) nach einem der Ansprüche 1 oder 2 umfasst, wobei das Antriebssystem (102) an dem Triebwerkspylon (106) befestigt ist.

## Claims

1. Assembly (100, 100a-b) for mounting a propulsion system (102) having a vertical median plane (XZ) on an aircraft (10), said assembly (100, 100a-b) comprising:
- a wing (104) with a front spar (210), a suction-side panel (214) and a pressure-side panel (216), which are fastened at the upper portion of the front spar (210) and at the lower portion of the front spar (210), respectively, wherein a fourth bore (282a) and a fifth bore (282b) pass vertically through the suction-side panel (214),
- an engine pylon (106) comprising a primary structure (202), a blade (280), which is secured to the primary structure (202) and extends to the rear and in the upper portion of the primary structure (202), and two starboard-side (270a) and port-side (270b) fastening lugs, which are secured to the primary structure (202) and extend to the rear and along the sides of the primary structure (202), wherein a first bore (280a), a second bore (280b) and a third bore (280c) pass vertically through the blade (280), wherein a sixth bore (272a-b) passes horizontally through each fastening lug (270a-b), and
- a starboard-side fitting (274a) and a port-side fitting (274b), which have, respectively, a starboard-side female clevis (276a) in which the starboard-side fastening lug (270a) is inserted and a port-side female clevis (276b) in which the port-side fastening lug (270b) is inserted, wherein a seventh bore (278a-b) passes through each female clevis (276a-b), the axis of said seventh bore being coaxial with the axis of the sixth bore (272a-b) in the fastening lug (270a-b) inserted therein, and wherein a pin is inserted into the associated bores aligned in this way,
said assembly (100, 100a-b) being **characterized in that** the starboard-side fitting (274a) and a port-side fitting (274b) are fastened beneath the pressure-side panel (216) and **in that** the assembly (100, 100a-b) comprises also:
- two first shackles (252) arranged vertically on either side of the blade (280) and of the suction-side panel (214), wherein a first bore of each first shackle (252) is aligned so as to be coaxial with the first bore (280a) of the blade (280), with a pin being inserted into the bores aligned in this way, wherein a second bore of each first shackle (252) is aligned so as to be coaxial with the fourth bore (282a) of the suction-side panel (214), with a pin being inserted into the bores aligned in this way, and
- two second shackles (254) arranged vertically on either side of the blade (280) and of the suction-side panel (214), wherein a first bore of each second shackle (254) is aligned so as to be coaxial with the second bore (280b) of the blade (280), with a pin being inserted into the bores aligned in this way, wherein a second bore of each second shackle (254) is aligned so as to be coaxial with the third bore (280c) of the blade (280), with a pin being inserted into the bores aligned in this way, wherein a third bore of each second shackle (254) is aligned so as to be coaxial with the fifth bore (282b) of the suction-side panel (214), with a pin being inserted into the bores aligned in this way.

2. Assembly (100b) according to Claim 1, **characterized in that** the suction-side panel (214) comprises a plate (302) that is secured to the suction-side panel (214) and **in that** the two bores (282a-b) of the suction-side panel (214) are formed in said plate (302).

3. Aircraft (10) comprising a propulsion system (102) and an assembly (100) according to either of Claims 1 and 2, wherein the propulsion system (102) is fastened to the engine pylon (106).
